# EUROPEAN PATENT APPLICATION

(11) **EP 3 651 131 A1**
(43) Date of publication of application: **13.05.2020**
(21) Application number: 18842938.5
(22) Date of filing: 06.06.2018
(51) Int. Cl.: G07F 17/00, G06Q 30/02

(54) **MULTIMEDIA SYSTEM OF SHARED BICYCLE**

(30) Priority: 07.08.2017 CN 201720982048 U; 06.02.2018 CN 201820211278 U
(71) Applicant: Hangzhou Qingqi Science And Technology Co., Ltd., Zhejiang 311100 (CN)
(72) Inventor: LI, Gang, Hangzhou Zhejiang 311100 (CN); HE, Guotai, Hangzhou Zhejiang 311100 (CN); FENG, Meimiao, Hangzhou Zhejiang 311100 (CN); LI, Zaixing, Hangzhou Zhejiang 311100 (CN); LIU, Sheng, Hangzhou Zhejiang 311100 (CN)
(74) Representative: Wang, Bo
(86) International application number: PCT/CN2018/090047
(87) International publication number: WO 2019/029246

(57) **Abstract**

The present disclosure relates to the field of shared bicycles, and in particular, to a multimedia system of a shared bicycle. The multimedia system includes a lock main control unit, a cloud server, a display unit and a short message unit. The lock main control unit is connected to the cloud server, the display unit and the short message unit, respectively. The display unit includes a storage device. The lock main control unit detects a stored content of the storage device and controls the short message unit to send a push signal to the cloud server when the stored content does not include multimedia data. The cloud server sends the multimedia data to the storage device based on the push signal. The lock main control unit controls the display unit to turn on when a lock of a shared bicycle is unlocked and controls the display unit to turn off when the shared bicycle ends a trip. The multimedia system downloads the multimedia data only when there is no multimedia data stored, and deletes the stored content periodically to release a storage space, which can facilitate a user to obtain more multimedia data.

## Description

### CROSS-REFERENCE TO RELATED APPLICATIONS

**This** PCT application claims priority of Chinese Patent Application No. CN201820211278.7, filed on February 6, 2018, the Chinese Patent Application No. CN201820211278.7 claims priority of Chinese Patent Application No. CN201720982048.6, filed on August 7, 2017, the contents of each of which are hereby incorporated by reference.

### TECHNICAL FIELD

**The** present discloaure relates to a field of bicycle sharing, and in particular, to a multimedia system of a shared bicycle.

### BACKGROUND

Bicycle sharing refers to a provision of bicycle sharing services on campuses, subway stations, bus stations, residential areas, commercial areas, public service areas, etc., via cooperation between enterprises and the government, which is a new form of sharing economy.

When a user opens a bicycle sharing app, the user can view a distribution map of nearby bicycles that can be rented, make an appointment, etc. After a user finds a bicycle, the bicycle can be unlocked by scanning a quick response (QR) code with a mobile phone or by inputting a code. After the user finishes riding, the bicycle can be parked in an area where bicycles are allowed to be parked on both sides of a road. Then the bicycle can be locked and the use of the bicycle is finished.

However, for existing shared bicycles, there is no multimedia system on the bicycles. As an emerging platform, it cannot make good use of its inherent multimedia information transmission channels, which causes a waste of resources. In addition, when a shared bicycle stores too much data, it is easy to cause a storage burden, therefore, it is necessary to delete data regularly. At the same time, the existing shared bicycles have no navigation function, accordingly, a user needs to use a mobile phone to navigate a trip while riding a bicycle, which is very dangerous and easily causes traffic accidents.

Therefore, how to reasonably control a shared bicycle platform for multimedia data dissemination and regularly delete multimedia data, how to reasonably control a multimedia system for navigation, and further improve user experience, have been key research issues for those skilled in the art.

### SUMMARY

Aiming at the above-mentioned disadvantages of prior arts, the technical problem to be solved in the present disclosure is to provide a multimedia system for a shared bicycle to solve the problem that existing shared bicycles lack a multimedia play device and a navigation device and the problem that a storage space of the shared bicycle is insufficient.

In order to solve the technical problem, the present disclosure provides a multimedia system of a shared bicycle. The multimedia system includes a lock main control unit, a cloud server, a display unit, and a short message unit. The lock main control unit is connected to the cloud server, the display unit, and the short message unit, respectively. The display unit includes a storage device. The lock main control unit detects a stored content of the storage device and controls the short message unit to send a push signal to the cloud server when the stored content does not include multimedia data. The cloud server sends the multimedia data to the storage device based on the push signal. The lock main control unit controls the display unit to turn on when a lock of a shared bicycle is unlocked and controls the display unit to turn off when the shared bicycle ends a trip.

A preferred embodiment is that the lock main control unit sends a clear signal to the storage device every 24 hours. The storage device clears the stored content based on the clear signal.

A preferred embodiment is that the display unit includes a navigation module. The navigation module performs a route navigation based on a GPS signal and directs the display unit to display a navigation route.

A preferred embodiment is that the display unit further includes a first display screen. The first display screen is set on a head of the bicycle.

A preferred embodiment is that the display unit further includes a second display screen. The second display screen is set above a rear tire of the bicycle.

A preferred embodiment is that the first display screen is configured to display navigation information or the multimedia data. The second display screen is configured to display the multimedia data.

A preferred embodiment is that the display unit further includes a touch screen. The touch screen is attached to a front surface of the first display screen. The touch screen is configured to sense a touch position of a user.

A preferred embodiment is that the multimedia system includes a voice play unit. The voice play unit is connected to the lock main control unit. The voice play unit includes a first speaker and a second speaker. The lock main control unit controls the first speaker to play the navigation voice information. The lock main control unit controls the second speaker to play multimedia voice information.

A preferred embodiment is that the voice play unit further includes a voice controller. The voice controller is connected to the first speaker and the second speaker respectively. The voice controller is configured to control the second speaker to stop playing the multimedia voice information when it is detected that the first speaker plays the navigation voice information.

A preferred embodiment is that the multimedia data includes a page, a picture, a video, a text, and a sound.

Compared with the prior arts, the beneficial effect of the present disclosure is that, an advertising purpose is achieved by designing a multimedia system for a shared bicycle. The multimedia system includes a display unit. The display unit may play multimedia data. At the same time, the multimedia system is provided with a navigation module configured to provide a navigation to a user, which is convenient for the user to travel and can avoid a dangerous behavior of holding a navigation device to view a route while riding the shared bicycle. In addition, the multimedia system downloads the multimedia data when there is no multimedia data stored and deletes the stored content periodically, which can replace the multimedia data regularly and reasonably use the storage space, prevent the use of the shared bicycle from being affected due to insufficient storage space, and further improve user experience.

### BRIEF DESCRIPTION OF THE DRAWINGS

The present disclosure is further described in terms of exemplary embodiments and the drawings, and in the drawings:
FIG. 1 is a first block diagram of a multimedia system of the present disclosure;
FIG. 2 is a second block diagram of a multimedia system of the present disclosure;
FIG. 3 is a third block diagram of a multimedia system of the present disclosure;
FIG. 4 is a fourth block diagram of a multimedia system of the present disclosure;
FIG. 5 is a fifth block diagram of a multimedia system of the present disclosure.

### DETAILED DESCRIPTION

Preferred embodiments of the present disclosure will be described in detail with reference to accompanying drawings.

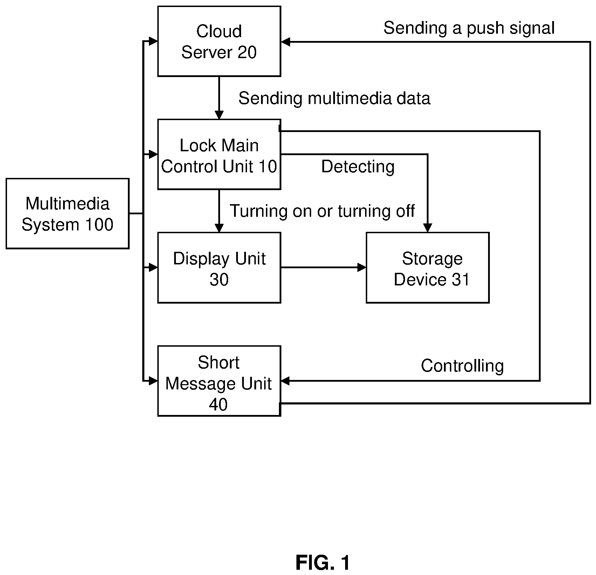

As shown in FIG. 1 to FIG. 5, the present disclosure provides a preferred embodiment of a multimedia system 100.

Referring to FIG. 1, a multimedia system 100 of a shared bicycle includes a lock main control unit 10, a cloud server 20, a display unit 30, and a short message unit 40. The lock main control unit 10 is connected to the cloud server 20, the display unit 30, and the short message unit 40, respectively. The display unit 30 includes a storage device 31.

Specifically, the lock main control unit 10 detects a stored content of the storage device 31 and controls the short message unit 40 to send a push signal to the cloud server 20 when the stored content does not include multimedia data. The cloud server 20 sends the multimedia data to the storage device 31 based on the push signal. The lock main control unit 10 controls the display unit 30 to turn on when a lock of the bicycle is unlocked and controls the display unit 30 to turn off when the bicycle ends a trip. The display unit 30 plays the multimedia data when it is turned on. When the lock main control unit 10 detects that the storage device 31 stores the multimedia data, the short message unit 40 does not send the push signal to the cloud server 20, thereby saving a storage space and preventing a user from being affected due to an insufficient memory of the storage device 31. The lock main control unit 10 is a main control circuit board configured in a lock of the shared bicycle. The main control circuit board is provided with a short message circuit configured to send a short message. The short message circuit is the short message unit 40 or a separate short message circuit board is connected to the main control circuit board for data interaction.

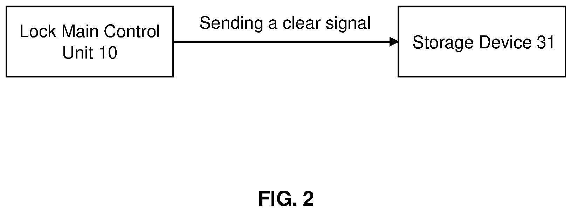

Referring to FIG. 2, the lock main control unit 10 sends a clear signal to the storage device 31 every 24 hours. The storage device 31 clears the stored content based on the clear signal. The lock main control unit 10 clears the stored content of the storage device 31 periodically to ensure that there is sufficient storage space. Meanwhile, a user can obtain different multimedia data at different time periods, thereby obtaining more information. Of course, the lock main control unit 10 may not send the clear signal to the storage device 31 every 24 hours, and may send the clear signal at an arbitrary time interval.

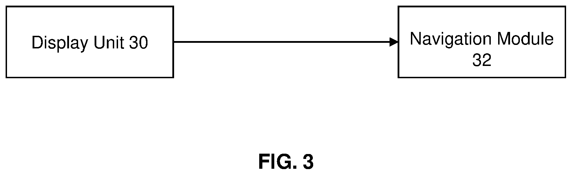

Specifically, referring to FIG. 3, the display unit 30 includes a navigation module 32. The navigation module 32 performs a route navigation based on a GPS signal and directs the display unit 30 to display a navigation route. By providing the navigation module 32 on the shared bicycle, when a user rides a shared bicycle, operations such as a route navigation, a location search, a location search of surrounding public facilities, etc. can be implemented, which can improve user experience and avoid a dangerous behavior of watching mobile navigation while riding the shared bicycle. The main control circuit board is provided with a navigation circuit configured for navigation. The navigation circuit is the navigation module 32, or a separate navigation circuit board is connected to the main control circuit board for data interaction.

The navigation module 32 includes a GPS signal transmitting and receiving antenna and a GPS signal processing chip. The GPS signal processing chip obtains a GPS signal via the GPS signal transmitting and receiving antenna, which can realize a route navigation of the shared bicycle, and uploads position information via the GPS signal transmitting and receiving antenna, which can realize a precise navigation.

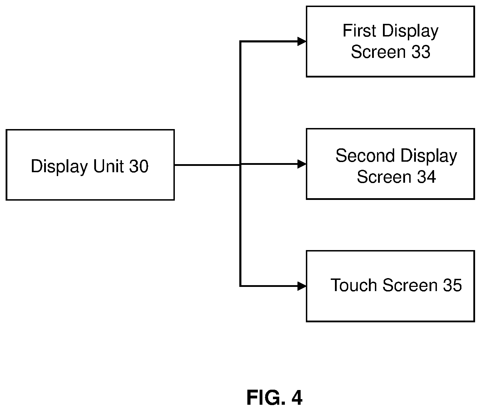

Further, referring to FIG. 4, the display screen 21 includes a first display screen 211. The first display screen 211 is set on a head of the bicycle, so that the user can observe information on the display 21 during riding. The display screen 21 is connected to a power source of the shared bicycle. The power source is charged by a solar charging device of the shared bicycle and a hub dynamo. At the same time, the display screen 21 communicates with the lock main control unit 10 via a wired connection or a wireless connection. The wireless connection includes a Bluetooth communication, a WIFI communication, a radio frequency communication, a mobile communication, etc. If the wired connection is adopted, wires are configured in a frame of the shared bicycle, which can improve the overall beauty of the shared bicycle.

Preferably, the display screen 21 further includes a second display screen 212. The second display screen 212 is set above a rear tire of the bicycle, for example, set on a conspicuous position such as a seat, a wheel bracket, etc.

The first display screen 33 is configured to display multimedia data or a navigation route. The second display screen 34 is configured to display the multimedia data. The first display screen 33 is provided with a switch. If a user turns on the switch when the first display screen 33 is turned on, the first display screen 33 displays the navigation route. If the user does not turn on the switch when the first display screen 33 is turned on, the first display screen 33 displays the multimedia data.

Furthermore, the display unit 30 further includes a touch screen 35. The touch screen 35 is attached to a front surface of the first display screen 33. The touch screen 35 is configured to sense a touch position of the user, thereby realizing human-computer interaction.

Preferably, the touch screen 35 is an infrared touch screen, a capacitive touch screen, a nano touch screen, or a resistive touch screen. Of course, the touch screen 35 is not limited to the above, and is not listed here one by one.

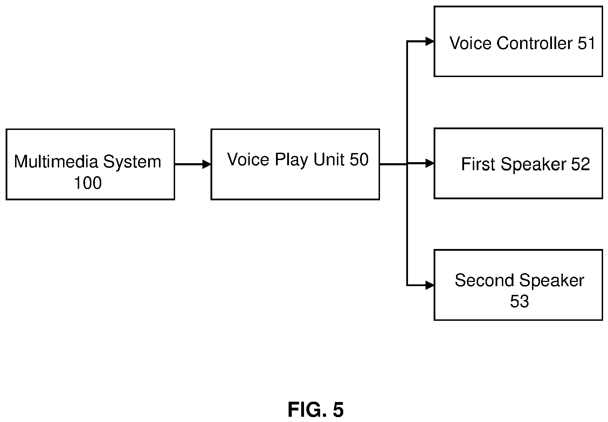

In this embodiment, and referring to FIG. 5, the multimedia system 100 further includes a voice play unit 50. The voice play unit 50 is connected to the lock main control unit 10. The voice play unit 50 includes a first speaker 52 and a second speaker 53. The lock main control unit 10 controls the first speaker 52 to play navigation voice information. The lock main control unit 10 controls the second speaker 53 to play multimedia voice information.

Furthermore, the voice play unit 50 further includes a voice controller 51. The voice controller 51 is connected to the first speaker 52 and the second speaker 53, respectively. The voice controller 51 is configured to control the second speaker 53 to stop playing the multimedia voice message when it is detected that the first speaker 52 plays the navigation voice message, thus the second speaker 53 can be prevented from playing multimedia voice information when the first speaker 52 plays the navigation voice information, which can result in that the user cannot obtain route navigation and affect user use.

**The** main control circuit board is provided with a voice play circuit configured to play voice. The voice play circuit is the voice play unit 50, or a separate voice play circuit board is connected to the main control circuit board for data interaction. The voice controller 51 is a sub-circuit embedded in the main control circuit board, or a separate control circuit board is connected to the main control circuit board for data interaction, or a separate control circuit board is connected to the voice play circuit board for data interaction.

Preferably, the multimedia data includes a page, a picture, a video, a text and a sound. Specifically, the page may cover an entire display area or part of the display area. The picture and the video may be displayed in an embedded manner, such as pop-ups, fade-ins, etc. The picture may be a picture collection. The text is relevant text content displayed in the part of the display area of the display screen, or relevant text inserted when playing other multimedia data. The sound may be played based on corresponding multimedia information, or sound information is played separately.

In summary, the above description is only a preferred embodiment of the present disclosure, and not intended to limit the scope of the present disclosure. Any modification, equivalent replacement, improvement, or the like, made within the spirit and principle of the present disclosure do not depart from the scope of the present disclosure.

## Claims

1. A multimedia system of a shared bicycle, comprising: a lock main control unit, a cloud server, a display unit, and a short message unit, the lock main control unit being connected to the cloud server, the display unit, and the short message unit, respectively; the display unit including a storage device, wherein,
the lock main control unit detects a stored content of the storage device and controls the short message unit to send a push signal to the cloud server when the stored content does not include multimedia data;
the cloud server sends the multimedia data to the storage device based on the push signal; and
the lock main control unit controls the display unit to turn on when a lock of the shared bicycle is unlocked and controls the display unit to turn off when the shared bicycle ends a trip.

2. The multimedia system of claim 1, wherein
the lock main control unit sends a clear signal to the storage device every 24 hours; and
the storage device clears the stored content based on the clear signal.

3. The multimedia system of any one of claim 1 or claim 2, wherein the display unit includes a navigation module, the navigation module performing a route navigation based on a GPS signal and directing the display unit to display a navigation route.

4. The multimedia system of claim 2, wherein the display unit further includes a first display screen, the first display screen being set on a head of the bicycle.

5. The multimedia system of claim 4, wherein the display unit further includes a second display screen, the second display screen being set above a rear tire of the bicycle.

6. The multimedia system of claim 5, wherein
the first display screen is configured to display navigation information or the multimedia data; and
the second display screen is configured to display the multimedia data.

7. The multimedia system of claim 6, wherein the display unit further includes a touch screen, the touch screen being attached to a front surface of the first display screen and the touch screen being configured to sense a touch position of a user.

8. The multimedia system of claim 1 or claim 2, further comprising: a voice play unit, wherein
the voice play unit is connected to the lock main control unit,
the voice play unit includes a first speaker and a second speaker,
the lock main control unit controls the first speaker to play navigation voice information and the lock main control unit controls the second speaker to play multimedia voice information.

9. The multimedia system of claim 8, wherein the voice play unit further includes a voice controller, wherein the voice controller is connected to the first speaker and the second speaker respectively, and the voice controller is configured to control the second speaker to stop playing the multimedia voice information when it is detected that the first speaker plays the navigation voice information.

10. The multimedia system of claim 1, wherein the multimedia data includes a page, a picture, a video, a text, and a sound.
